(19) Europäisches Patentamt
European Patent Office
Office européen des brevets

(11) EP 1 876 430 A2

(12) **EUROPÄISCHE PATENTANMELDUNG**

(43) Veröffentlichungstag:
**09.01.2008 Patentblatt 2008/02**

(51) Int Cl.:
*G01F 15/00* (2006.01)     *G05G 1/10* (2006.01)
*H01H 3/08* (2006.01)

(21) Anmeldenummer: **07011361.8**

(22) Anmeldetag: **11.06.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **06.07.2006 DE 102006031626**

(71) Anmelder: **Santo, Wilfried**
**79541 Lörrach-Hauingen (DE)**

(72) Erfinder:
• **Wandres, Horst**
**79199 Kirchzarten (DE)**
• **Lanby, Josef**
**79254 Oberried (DE)**

(74) Vertreter: **Weiss, Peter**
**Zeppelinstrasse 4**
**78234 Engen (DE)**

(54) **Mechanischer Stell- oder Dosierknopf**

(57) Bei einem mechanischen Stell- oder Dosierknopf mit einer Skalierung (14) für Positions- oder Dosierwerte und einem Drehelement (1, 1.1, 1.2), wobei die Skalierung (14) und das Drehelement (1, 1.1, 1.2) über ein Getriebe (5, 7, 10, 12 bzw. 7.1, 10, 12, 23 bzw. 7.2, 10, 12, 24 bzw. 25 - 30) miteinander verbunden sind, soll als Getriebe (5, 7, 10, 12 bzw. 7.1, 10, 12, 23 bzw. 7.2, 10, 12, 24 bzw. 25 - 30) ein Differenzzahngetriebe zwischen Drehelement (1, 1.1, 1.2) und Skalierung (14) vorgesehen sein.

Fig. 1

EP 1 876 430 A2

**Beschreibung**

Die Erfindung betrifft einen mechanischen Stell- oder Dosierknopf mit einer Skalierung für Positions- oder Dosierwerte und einem Drehelement, wobei die Skalierung und das Drehelement über ein Getriebe miteinander verbunden sind.

**Stand der Technik**

Derartige Stell- oder Dosierknöpfe werden z. B. in der Medizin, wie etwa bei Infusionspumpen zur Verabreichung eines bestimmten Medikaments verwendet, und hier, um unterschiedliche. Dosiergrößen einzustellen. Bei einer richtigen Dosierung für die Verabreichung eines Medikaments ist es bekanntlich zwingend erforderlich, dass sowohl die richtige Dosiermenge eingestellt als auch abgelesen werden kann. Hierfür wird die zu verabreichende Dosis z. B. durch ein Drehelement am Dosierknopf eingestellt, wobei dieser gleichzeitig einen Finger besitzt, welcher dann den gewünschten Wert einer bestimmte Dosisdrehposition auf dem Anzeiger zuordnet.

Vor allem werden solche Stell- oder Dosierknöpfe auch in der Fluid- und Ventiltechnik oder bei Druckmaschinen verwendet bzw. überall dort wo mehr als eine Umdrehung eines Drehelementes reproduzierbar sein soll.

Für die Erfassung und das Anzeigen von Messwerten sind bereits die unterschiedlichsten Systeme bekannt, bezeichnet als Inkrementalgeber, Drehgeber, Positionsanzeiger od. dgl., welche jedoch in der Regel relativ aufwendige im Stell- oder Dosierknopf integrierte Getriebeeinheiten besitzen, um durch eine entsprechende Getriebeübersetzung mehrere Umdrehungen über eine Skalierung oder eine mechanische Zahlenrolle anzeigen zu können. Dabei zeichnen sich die bekannten Konstruktionen auch dadurch aus, dass der hierbei verwendete Getriebeaufbau zur Auflösung von mehr als einer Umdrehung des Stell- oder Dosierknopfes nicht konzentrisch zu diesem ausgeführt ist, was sich wiederum in einer dementsprechend umfangreichen Baugröße niederschlägt. Denkbar wäre z. B. die Verwendung eines Planetengetriebes um eine konzentrische und somit kleinere Bauweise zu erhalten, was jedoch den Nachteil hat, dass hierbei separate Lagerstellen für die Planetenräder erforderlich sind, was dann wiederum relativ hohe Anforderungen an die Konstruktion im Hinblick auf die Toleranzen der Achsabstände und Montage stellt. Nur beispielsweise wird hier auf die DE 199 58 440 A1 verwiesen.

Ferner sind sogenannte Differenzzahngetriebe bekannt, die z. B. im Präzisionsmaschinenbau eingesetzt werden und ein relativ hohes Untersetzungsverhältnis ermöglichen. So ist aus der DE 38 76 566 T2 ein derartiges Getriebe bekannt; dieses besteht aus einem ersten steifen kreisförmigen Zahnkranz, einem zweiten steifen kreisförmigen Zahnkranz, der längs der Achse des ersten Zahnkranzes daran angrenzend angeordnet ist und eine andere Zähnezahl als der erste Zahnkranz hat, sowie eine koaxial im Inneren der beiden kreisförmigen Zahnkränze angeordneten sogenannten Flexozahnkranz mit der gleichen Zähnezahl wie die des ersten kreisförmigen Zahnkranzes, und einen sogenannten Wellengenerator zur Verbiegung und Verformung des Flexozahnkranzes dergestalt, dass dieser in teilweiser Eingriffnahme mit den betreffenden Zähnen beider kreisförmiger Zahnkränze gebraucht wird, sodass eine Drehung des Wellengenerators eine relative Drehung zwischen dem ersten und zweiten Zahnkranz hervorruft.

**Aufgabe der Erfindung**

Hier setzt die Erfindung ein, der die Aufgabe zugrunde liegt, einen einfach aufgebauten mechanischen Stell- oder Dosierknopf zu schaffen, der kostengünstig und mit möglichst geringem Bauteileaufwand sowie geringer Montagezeit herstellbar ist, wobei eine Feineinstellung der Positions- oder Dosierwerte mit mehreren Umdrehungen des Stell- oder Dosierknopfes möglich sein soll.

**Lösung der Aufgabe**

Diese Aufgabe wird erfindungsgemäß dadurch gelöst, dass als Getriebe ein Differenzzahngetriebe zwischen Drehelement und Skalierung vorgesehen ist.

Nach Maßgabe der Erfindung besitzt das Differenzzahngetriebe einen ersten steifen Zahnkranz sowie einen zweiten steifen kreisförmigen Zahnkranz, der neben dem ersten Zahnkranz mit gleicher Längsachse angeordnet ist, die koaxial mit der Längsachse des Drehelements verläuft, wobei der zweite Zahnkranz eine vom ersten Zahnkranz abweichende Zähnezahl aufweist. Ferner besitzt es einen flexiblen Zahnring, der koaxial innerhalb beider kreisförmiger Zahnkränze angeordnet ist und die gleiche Zahnzahl wie der erste kreisförmige Zahnkranz hat, sowie einen koaxialen Nocken am Drehelement zur Verformung des flexiblen Zahnrings in eine nicht kreisförmige Konfiguration, um den Zahnring in eine teilweise Eingriffnahme mit den Zähnen des ersten und zweiten kreisförmigen Zahnkranzes zu bringen und zur Drehung der verformten Konfiguration des Zahnrings, um letztendlich eine Relativbewegung zwischen dem ersten und dem zweiten Zahnkranz und somit ein Verstellen des Messwertanzeigers hervorzurufen.

Die erfindungsgemäße Verwendung eines geeigneten Differenzzahngetriebes bewirkt daher je nach dem gewählten Übersetzungsverhältnis, dass durch ein Drehen des Drehelements am Stell- oder Dosierknopf, z. B. um 360°, eine bestimmte geringe Drehbewegung des Messwertanzeigers erfolgt, die dann wiederum in einer Relation zu einem bestimmten Stell- oder Dosierwert steht.

Ausgehend von dem Gehäuse des Stell- oder Dosierknopfes, welches vorzugsweise zylindrisch ausgebildet ist, bildet dieses Gehäuse bereits den äußeren Teil des Differenzzahngetriebes, d. h. der erste kreisförmige Zahnkranz des Getriebes wird vorteilhaft als Innenverzahnung innerhalb des Gehäuses einstückig mit diesem vorgesehen, wobei ferner das Gehäuse an seinem Umfang ein Fenster für das Ablesen der jeweiligen Werte des Anzeigers aufweist.

Der zweite Zahnkranz, der längs der Achse des ersten Zahnkranzes daran angrenzend angeordnet ist, ist dagegen als Innenverzahnung in einer zylindrischen Anzeigetrommel einstückig mit dieser vorgesehen, die vorteilhaft gleichzeitig auf ihrem Außenmantel die Skalierung aufweist.

Als Lagerung aller Getriebekomponenten und quasi als Antriebsachse dient das Drehelement, das zweckmäßigerweise aus einem Wellenteil und einem Stellgriff einstückig ausgebildet ist, wobei der Nocken zur Verformung des flexiblen Zahnrings an dem Wellenteil koaxial angebracht ist. Hierbei kann der Stellgriff als Drehknopf ausgebildet sein und eine weitere Skala als Referenz zur Messwertanzeige aufweisen.

Die einem Differenzzahngetriebe typische teilweise Eingriffnahme des flexiblen Zahnrings kann dadurch erreicht werden, indem der koaxiale Nocken an dem Wellenteil des Drehelements elliptisch, exzentrisch oder polygon ausgebildet wird, was gleichzeitig bei allen aufgezeigten Möglichkeiten vorteilhaft einen Toleranzausgleich ermöglicht.

Zum einfachen Verbinden des Wellenteils des Drehelements mit dem Einstellungsobjekt ist es zweckmäßig, die jeweiligen Anschlussabschnitte als Steckverbindung auszubilden, indem das Drehelement entweder als Hohlwelle mit einer Madenschraubenverbindung ausgebildet ist, oder es wird als Steckverbindung ein Adapter verwendet, dessen eine Ende einen Mehrkant, wie Vier- oder Sechskant besitzt, und dessen anderes Ende ein zentrales Sackloch mit einer Madenschraubenverbindung aufweist, in die dann wiederum die Welle des Einstellungsobjekts steck- und befestigbar ist. In Bezug auf den Mehrkant des Adapters muss hierbei der Anschlussabschnitt des Drehelements einen entsprechend ausgebildeten Innenkant aufweisen.

Der konzentrische Aufbau des erfindungsgemäßen Stell- oder Dosierknopfes ermöglich vorteilhaft nur eine axiale Lagerung für alle Komponenten. Auch ist eine schnelle Montage möglich, da alle Komponenten leicht axial zusammengesteckt werden können, wobei die Zahl der Komponenten äußerst gering gehalten ist, d. h. es werden nicht mehr als vier wesentliche Einzelteile benötigt. Für einen schnellen und unkomplizierten Zusammenbau der erfindungsgemäßem Stell- oder Dosierköpfe ist es schließlich besonders zweckmäßig, dass das über die zylindrische Anzeigetrommel axial steckbare zylindrische Gehäuse durch eine Schnappverbindung am Stellgriff gehalten ist.

In einem anderen Ausführungsbeispiel, welches allerdings komplizierter gestaltet ist, kann die Verstellung der Skalierung auch über ein umlaufendes Doppelzahnrad erfolgen. Dieses ist auf dem Umfang des Drehelementes angeordnet und läuft beim Drehen sowohl eine Stirnzahnung eines drehfesten Gehäuserings als auch eine Stirnzahnung der Skalierung ab. Da die beiden Zahnräder des Doppelzahnrades jedoch eine unterschiedliche Zähnezahl aufweisen und drehfest miteinander verbunden sind, erfolgt ein Drehen der Skalierung je nach der Zähnezahldifferenz.

Weitere Merkmale und Vorteile der vorliegenden Erfindung ergeben sich aus der nachfolgenden Beschreibung mehrerer Ausführungsbeispiele in Verbindung mit der Zeichnung; es zeigen:

Figuren 1.1-1.6 eine schematische Darstellung der einzelnen Komponenten eines erfindungsgemäßen Stell- oder Dosierknopfes und

Figuren 2.1-2.5 eine schematische Darstellung des Stell- oder Dosierknopfes gemäß Fig. 1 in fünf verschiedenen Positionen bei einer vollen Umdrehung seines Stellgriffs sowie Querschnitte durch das in seiner Lage sich entsprechend der Drehfortschritte verändernde Differenzzahngetriebe mit einem elliptischen Nocken;

Figur 3 eine schematische Draufsicht auf ein weiteres Ausführungsbeispiel eines erfindungsgemässen Differenzzahngetriebes;

Figur 4 eine Draufsicht auf ein weiteres Ausführungsbeispiel eines erfindungsgemässen Differenzzahngetriebes;

Figur 5 eine teilweise geschnitten dargestellte Seitenansicht eines weiteren Ausführungsbeispiels eines Stell- oder Dosierknopfes.

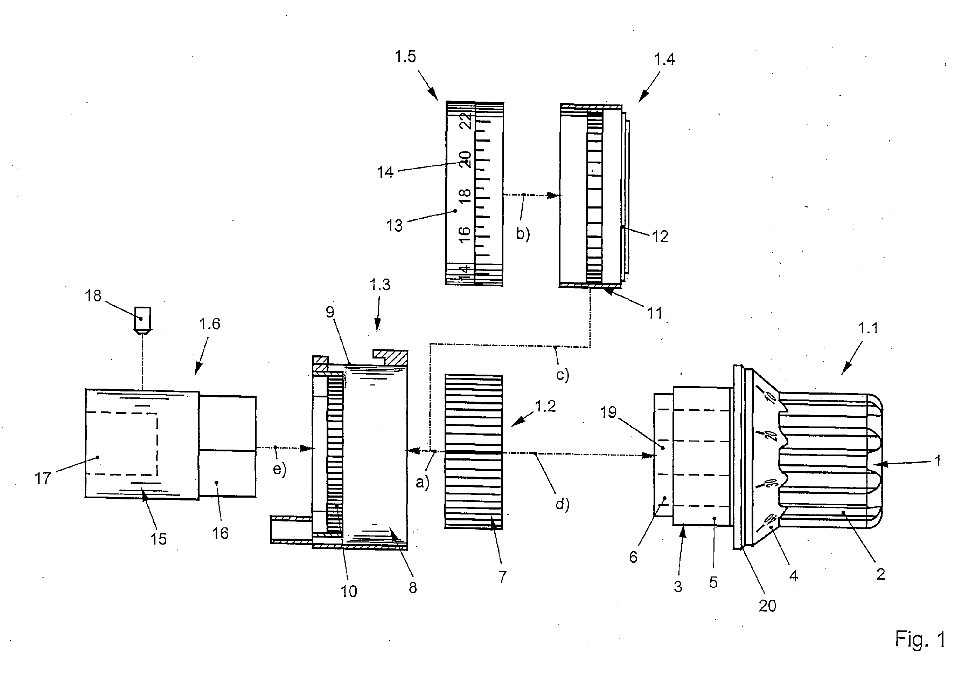

In Figur 1 sind die einzelnen Komponenten 1.1 - 1.6 eines erfindungsgemäßen Stell- oder Dosierknopfes schematisch gezeigt, und zwar bezeichnet 1 in Fig. 1.1 ein Drehelement, das aus einem zylindrischen Stellgriff 2 und einem an diesem einstückig angesetzten Wellenteil 3 besteht. Der als Drehknopf ausgebildete Stellgriff 2 besitzt an seinem konischen Bund eine umlaufende Skala 4 und das Wellenteil 3 einen koaxial angeordneten und im Querschnitt elliptisch ausgebildeten Nocken 5. Ferner ist in das Wellenteil 3 an seinem freien Ende stirnseitig ein Innenvierkant 6 eingeformt.

Fig. 1.2 zeigt einen flexiblen aus Kunststoff bestehenden Zahnring 7, der zu dem bei der vorliegenden Erfindung zum Einsatz kommenden Differenzzahngetriebe gehört und dessen innere Umfangsfläche einer Länge aufweist, die dem Hüllkreis des elliptischen Nockens 5 entspricht, sodass der Zahnring 7 satt axial auf den Nocken 5 in Fig. 1 gesteckt bzw. geschoben werden kann.

In Fig. 1.3 ist das Gehäuse - bezeichnet mit 8 - des Differenzzahngetriebes schematisch im Schnitt dargestellt, welches als Zylinderring und an seinem Umfang an einer Stelle abgeflacht ausgebildet ist, wodurch ein Fenster 9 erhalten wird, das zum Ablesen von Positions- oder Dosierwerten dient. Ferner ist an der Innenfläche des aus Kunststoff bestehenden Gehäuses 8 ein kreisförmiger erster Zahnkranz 10 in der Form einer Innenverzahnung angeformt.

Fig. 1.4 zeigt als weitere Komponente des Getriebes eine zylindrische Anzeigentrommel 11 im Schnitt, welche ebenfalls aus Kunststoff besteht und die eine Innenverzahnung als zweiten Zahnkranz 12 besitzt, die ebenfalls fester Bestandteil der Anzeigetrommel 11 ist. Die Breite des Zahnkranzes 12 entspricht der Breite des ersten Zahnkranzes 10 im Gehäuse 8 und entspricht etwa der halben Breite der Anzeigetrommel 11.

Fig. 1.5 zeigt einen relativ dünnen Kunststoffring 13, auf dessen Außenmantel eine Skalierung 14 aufgebracht ist und der entsprechend dem Pfeil (b) in Fig. 1.5 axial auf den Außenmantel der Anzeigetrommel 11 gesteckt bzw. geschoben wird.

Zum Verbinden des Wellenteils 3 des Drehelements 1 mit einem nicht dargestellten Einstellungsobjekts ist eine Steckverbindung vorgesehen, zu deren Ausführung in Fig. 1.6 schematisch ein Adapter 15 dargestellt ist, an dessen einem Ende ein Vierkant 16 und seinem anderen Ende ein Sackloch 17 vorgesehen ist, das eine Madenschraubenverbindung 18 besitzt.

Entsprechend der Form des Vierkants 16 ist dann auch im Wellenteil 3 des Drehelements 1 der Innenvierkant 6 ausgebildet.

Schließlich ist das über die zylindrische Anzeigetrommel 11 koaxial steckbare zylindrische Gehäuse 8 durch eine Schnappverbindung 20 am Stellgriff - angedeutet in Fig. 1.1 - gehalten.

Der Zusammenbau und die Funktionsweise der vorliegenden Erfindung ist wie folgt:

Die in Fig. 1.1 - 1.6 gezeigten Komponenten werden zusammengebaut bzw. montiert indem zuerst der Zahnring 7 gemäß Pfeil (a) koaxial in das Gehäuse 8 hineingeschoben wird, und zwar bis dessen Zähne von den Zähnen des Zahnrings 7 vollständig überdeckt sind. Sodann wird die Skalierung 14 entsprechend Pfeil (b) axial auf die Anzeigetrommel 11 bündig gesteckt und diese koaxial gemäß Pfeil (c) in das Gehäuse 8 hineingeschoben. Daraufhin wird diese Einheit koaxial auf das Wellenteil 3 gemäß Pfeil (d) gesteckt, sodass sich dabei der Zahnring 7 über den elliptischen Nocken 5 legt und das Gehäuse 8 mit seinem freien Rand über den konischen Bund des Stellgriffs 2 bei 20 einschnappt. Mit diesen wenigen Handgriffen ist somit der erfindungsgemäße Stell- oder Dosierknopf in einfacher Weise zusammengebaut bzw. montiert.

Für einen Anschluss des so zusammengebauten Stell- oder Dosierknopfs an ein Einstellungsobjekt muss dann lediglich noch der Adapter gemäß Fig. 1.6 mit seinem Vierkant 16 in den Innenvierkant 16 des Wellenteils 3 axial gesteckt werden, wobei hier ähnlich wie in Fig. 1.6 dargestellt, der Vierkant 16 mit einer Madenschraube festgeklemmt werden kann. Es ist aber auch möglich, zusätzlich oder ausschließlich die Befestigung des Stell- oder Dosierknopfs durch eine Senkschraube zu bewerkstelligen, die von der Stirnseite des Stellgriffs 2 aus in die Stirnseite des Vierkant 16 geschraubt wird (nicht dargestellt).

Ferner kann es in diesem Zusammenhang auch zweckmäßig sein, das Drehelement 1 nur als Hohlwelle 19 mit z. B. einer Madenschraubenverbindung auszubilden, um es einfach auf eine Anschlusswelle stecken zu können. Letztere Lösung übernimmt auch der Adapter 15 mit seinem Sachloch 17 und der Madenschraube 18 (Fig. 1.6).

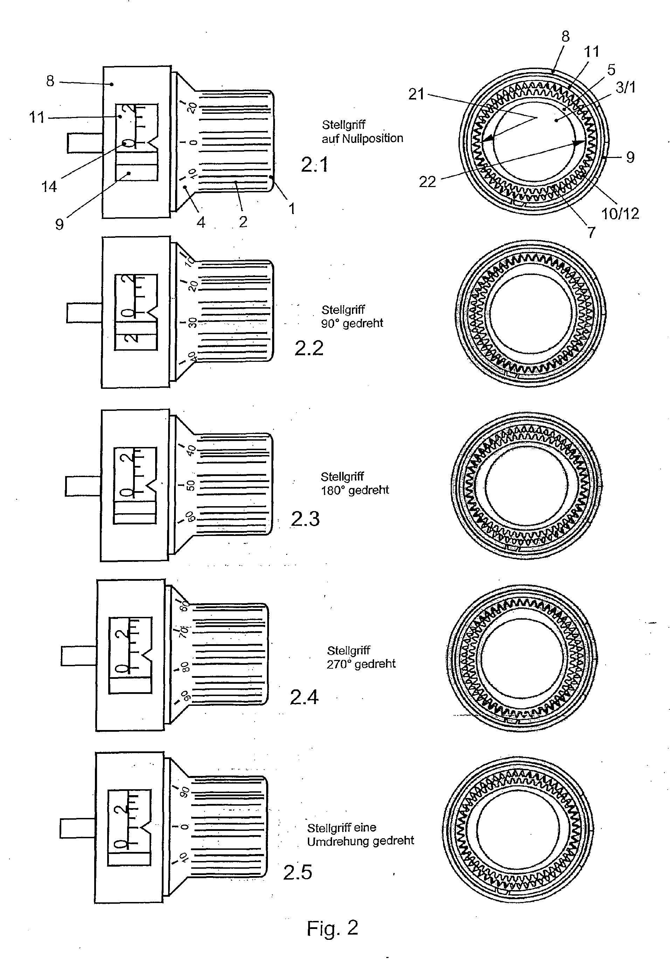

Die Funktionsweise der vorliegenden Erfindung wird nachfolgend anhand der Fig. 2 näher erläutert, und zwar ist in den Fig. 2.1 - 2.5 jeweils der nach den Fig. 1.1 - 1.5 zusammengebaute Stell- oder Dosierknopf in verschiedenen Betriebsphasen schematisch dargestellt.

Fig. 2.1 zeigt die Startphase, bei welcher der Stellgriff 2 mit seiner Skala 4 auf "Nullposition" steht und die Anzeigetrommel 11 mit ihrer Skalierung 14 ebenfalls "0" anzeigt. Gleichzeitig steht der elliptisch ausgebildete Nocken 5 mit seiner Hauptachse waagerecht, sodass der flexible Zahnring 7 in seinen beiden Scheitelpunkten 21 und 22 mit den betroffenen Zähnen beider kreisförmigen Zahnkränze 10 und 12 innerhalb de Gehäuses 8 im Eingriff steht.

Wird nun der Stellgriff 2 im Uhrzeigersinn um 90 ° gedreht (Fig. 2.2), dann wandert einerseits die Hauptachse des elliptischen Nockens 5 in eine senkrechte Lage und der beschriebene Eingriff des verformten Zahnrings 7 erfolgt ebenda, und andererseits wandert die Skalierung 14 entgegen dem Uhrzeigersinn um einen geringen Betrag.

Der Vorgang wiederholt sich dann wie in den Fig. 2.3 - 2.5 dargestellt, d. h. in Fig. 2.3 ist der Stellgriff 2 um 180°, in Fig. 2.4 um 270 ° und in Fig. 2.5 um eine volle Umdrehung gedreht worden. Sobald nun eine volle Umdrehung des Stellgriffs 2 erreicht ist, steht die Skala 4 des Stellgriffs 2 wieder auf der Position "0" und die Skalierung 14 ist exakt um eine großen Teilstrich entgegen dem Uhrzeigersinn weitergerückt.

Das Verhältnis der beiden Drehbewegungen zwischen dem Stellgriff 2 und der Anzeigtrommel 11 ist abhängig von dem Übersetzungsverhältnis des Differenzzahngetriebes, und zwar errechnet sich dieses nach der Formel

$$i \ = \ \cfrac{1}{1 - \left(\cfrac{Z1}{Z3}\right)}$$

Z1 = Zähnezahl des ersten Zahnkranzes 10

Z3 = Zähnezahl des zweiten Zahnkranzes 12,

wobei hier Zähnezahldifferenzen von 2, (4), ...... möglich sind.

Dabei besitzen der Zahnkranz 10 in dem Gehäuse 8 und der Zahnring 7 die gleiche Anzahl von Zähnen, so dass diese beiden Bauteile bei einem Drehen des Drehelementes 1 in ihrer Lage zueinander nicht verstellt werden. Der zweite Zahnkranz 12 in der Anzeigentrommel 11 besitzt dagegen eine andere Anzahl von Zähnen, so dass bei einem Abwälzen des Zahnringes 7 entlang dem zweiten Zahnkranz 12 dieser gedreht wird.

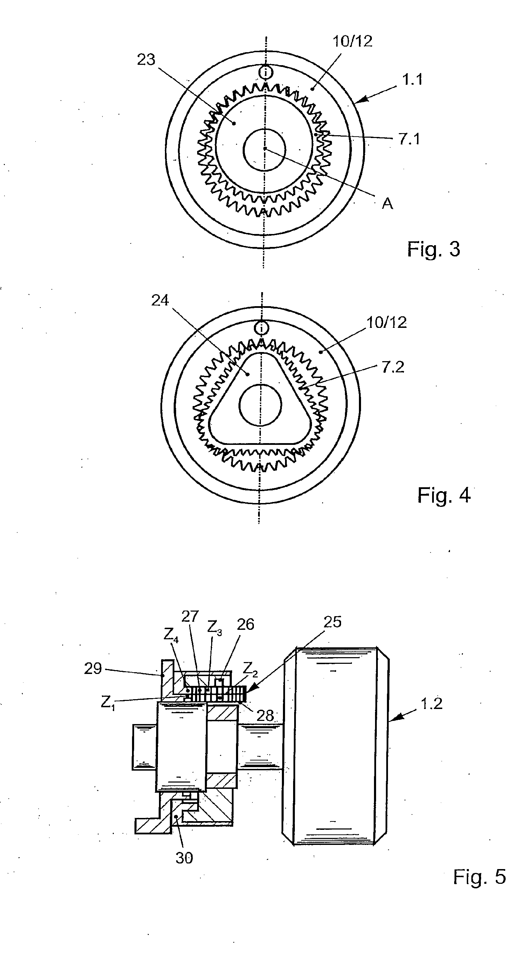

Während Figur 2 das Ausführungsbeispiel der Erfindung mit einem elliptischen Differenzzahlgetriebe zeigt, ist in Figur 3 angedeutet, dass auch die Anordnung eines exzentrischen Differenzzahngetriebes möglich ist. Hierbei ist ein Zahnring 7.1 rund ausgebildet und sitzt auf einem zylindrischen Exzenternocken 23 auf. Der Exzenternocken 23 ist anstelle des Nockens 5 vorgesehen und einem Drehelement 1.1 anstelle des Nockens 5 angeformt. Er umläuft eine Achse A des Drehelementes exzentrisch.

Der Zahnring 7.1 greift in Gebrauchslage ebenfalls, wie der Zahnring 7, in den ersten und zweiten Zahnkranz 10 bzw. 12 der Anzeigetrommel 11 bzw. des Gehäuses 8 ein, wobei das Verhältnis der Anzahl der Zähne das Gleiche sein kann, wie beim elliptischen Antrieb. Auch die Formel der Übersetzung ist die gleiche, jedoch sind die möglichen Zähnezahldifferenzen 1, 2 (3), .....

Gemäss Figur 4 ist anstelle des Nockens 5 bzw. des Exzenternockens 23 ein Polygonnocken 24 vorgesehen, auf den der Zahnring 7.2 aufgesteckt ist. Im vorliegenden Ausführungsbeispiel ist der Polygonnocken dreieckförmig geformt, er kann jedoch auch eine andere Zahl von Eingriffsbereichen aufweisen. Auch in diesem Ausführungsbeispiel ist die Formel für die Übersetzung die gleiche, jedoch bestehen folgende mögliche Zähnezahldifferenzen: 3, (6),... .

Schlussendlich könnte, wie in Figur 5 angedeutet, das Differenzzahngetriebe auch ausserhalb des Drehbereiches des Drehelementes 1.2 vorgesehen sein. Hierbei ist mit dem Drehelement 1.2 ein umlaufendes Doppelzahnrad 25 bestehend aus den auf eine Achse 26 gesteckten Zahnrädern 27 und 28 verbunden. Auf diese Weise weist das Drehelement jeweils eine Umfangsverzahnung Z2 bzw. Z3 auf. Anstelle der Zahnkränze 10 und 12 sind nunmehr Kronräder 29 und 30 mit jeweils einer Stirnzahnung Z1 und Z4 vorgesehen.

Die Formel für die Übersetzung lautet in diesem Fall

$$i \ = \ \cfrac{1}{1 - \left(\cfrac{Z1 \times Z3}{Z2 \times Z4}\right)}$$

Dies ergibt eine mögliche Zähnezahldifferenz 1, 2, 3, 4, 5, ... plus Übersetzungsmöglichkeiten durch das Doppelzahnrad 25.

Insgesamt wird mit der vorliegenden Erfindung ein rein mechanischer Stell- oder Dosierknopf geschaffen, der durch seinen konzentrischen Aufbau vorteilhaft nur eine axiale Lagerung für alle Getriebekomponenten benötigt, d. h. alle Bauteile können auf einer Achse - in diesem Falle der Drehelementenachse - montiert werden, wodurch eine außerordentliche Toleranzarmut erreicht wird. Ferner bilden die Messwertanzeige und das Getriebe eine Einheit, bei der gleichzeitig die Innenverzahnungen 10 und 12 jeweils in den dazugehörigen Bauteilen 8 und 11 integriert sind, wodurch auch weniger Einzelteile vorhanden sind, die montiert werden müssen und auch eventuell verloren gehen können. Nicht zuletzt besitzt die Anzeigetrommel 11 eine Mehrfachfunktion, und zwar dient sie als Lagerung, Zahnrad, Anzeige und Skalenschutz, da diese nur durch das Fenster 9 sichtbar ist, sodass für die Skalierung 14 auch lediglich nur bedruckte Papierstreifen (z. B. auch kundenspezifisch bedruckt) und dgl. verwendet werden können. Schließlich erlaubt die Erfindung eine einfache und schnelle Montage des Stell- oder Dosierknopfes, was durch die vorgesehene Schnapptechnik noch unterstützt wird. Der Knopf präsentiert sich dem Verbraucher in seiner Baugröße relativ klein und in seiner Bauform kompakt.

**Bezugszeichenliste**

| | | | | | |
|---|---|---|---|---|---|
| 1 | Drehelement | 34 | | 67 | |
| 2 | Stellgriff | 35 | | 68 | |
| 3 | Wellenteil | 36 | | 69 | |
| 4 | Skala | 37 | | 70 | |
| 5 | Nocken | 38 | | 71 | |
| 6 | Innenvierkant | 39 | | 72 | |
| 7 | Zahnring | 40 | | 73 | |
| 8 | Gehäuse | 41 | | 74 | |
| 9 | Fenster | 42 | | 75 | |
| 10 | Erster Zahnkranz | 43 | | 76 | |
| 11 | Anzeigetrommel | 44 | | 77 | |
| 12 | Zweiter Zahnkranz | 45 | | 78 | |
| 13 | Kunststoffring | 46 | | 79 | |
| 14 | Skalierung | 47 | | | |
| 15 | Adapter | 48 | | | |
| 16 | Vierkant | 49 | | | |
| 17 | Sackloch | 50 | | | |
| 18 | Madenschraubenverbindung | 51 | | | |
| 19 | Hohlwelle | 52 | | | |
| 20 | Schnappverbindung | 53 | | Z1 | Stirnverzahnung |
| 21 | Scheitelpunkt | 54 | | Z2 | Stirnverzahnung |
| 22 | Scheitelpunkt | 55 | | Z3 | Stirnverzahnung |
| 23 | Exzenternocken | 56 | | Z4 | Stirnverzahnung |
| 24 | Polygonnocken | 57 | | | |
| 25 | Doppelzahnrad | 58 | | | |
| 26 | Achse | 59 | | | |
| 27 | Zahnrad | 60 | | A | Achse |
| 28 | Zahnrad | 61 | | | |
| 29 | Kronrad | 62 | | | |
| 30 | Kronrad | 63 | | | |
| 31 | | 64 | | | |
| 32 | | 65 | | | |
| 33 | | 66 | | | |

**Patentansprüche**

1. Mechanischer Stell- oder Dosierknopf mit einer Skalierung (14) für Positions- oder Dosierwerte und einem Drehelement (1, 1.1, 1.2), wobei die Skalierung (14) und das Drehelement (1, 1.1, 1.2) über ein Getriebe (5, 7, 10, 12 bzw. 7.1, 10, 12, 23 bzw. 7.2, 10, 12, 24 bzw. 25 - 30) miteinander verbunden sind,
**dadurch gekennzeichnet,**
**dass** als Getriebe (5, 7, 10, 12 bzw. 7.1, 10, 12, 23 bzw. 7.2, 10, 12, 24 bzw. 25 - 30) ein Differenzzahngetriebe zwischen Drehelement (1, 1.1, 1.2) und Skalierung (14) vorgesehen ist.

2. Stell- oder Dosierknopf nach Anspruch 1, **dadurch gekennzeichnet, dass** das Drehelement (1) aus einem zylindrischen Stellgriff (2) mit einem an diesen angesetzten Wellenteil (3) besteht, welches einen Nocken (5) zur Aufnahme eines flexiblen Zahnrings (7) aufweist.

3. Stell- oder Dosierknopf nach Anspruch 2, **dadurch gekennzeichnet, dass** der Nocken (5) elliptisch, als Exzenternocken (23) oder als Polygonnocken (24) ausgebildet ist.

4. Stell- oder Dosierknopf nach den Anspruch 1 oder 2, **dadurch gekennzeichnet, dass** in einer zylindrischen Anzeigetrommel (11), welche auf ihrem Außenmantel die Skalierung (14) aufweist, ein Zahnkranz (12) vorgesehen ist.

5. Stell- oder Dosiervorrichtung nach Anspruch 4, **dadurch gekennzeichnet, dass** der Zahnring (7) in dem Zahnkranz (12) dreht.

6. Stell- oder Dosierknopf nach Anspruch 5, **dadurch gekennzeichnet, dass** der Zahnkranz (12) und Zahnring (17) eine unterschiedliche Anzahl an Zähnen aufweisen.

7. Stell- oder Dosiervorrichtung nach wenigstens einem der Ansprüche 4 bis 6, **dadurch gekennzeichnet, dass** die Anzeigetrommel (11) in einem Gehäuse (8) angeordnet ist.

8. Stell- oder Dosiervorrichtung nach Anspruch 7, **dadurch gekennzeichnet, dass** das Gehäuse (8) einen ersten Zahnkranz (10) aufweist.

9. Stell- oder Dosierknopf nach Anspruch 8, **dadurch gekennzeichnet, dass** der erste kreisförmige Zahnkranz (10) als Innenverzahnung fester Bestandteil des zylindrisch ausgebildeten Gehäuses (8) ist, welches an seinem Umfang ein Fenster (9) für das Ablesen des Anzeigers (11) für Positions- oder Dosierwerte (14) aufweist.

10. Stell- oder Dosiervorrichtung nach Anspruch 8 oder 9, **dadurch gekennzeichnet, dass** der erste Zahnkranz (10) koaxial zu dem zweiten Zahnkranz (12) angeordnet ist.

11. Stell- oder Dosiervorrichtung nach einem der Ansprüche 8 bis 10, **dadurch gekennzeichnet, dass** der erste Zahnkranz (10) dieselbe Anzahl an Zähnen aufweist, wie der Zahnring (7).

12. Stell- oder Dosiervorrichtung nach wenigstens einem der Ansprüche 8 bis 11, **dadurch gekennzeichnet, dass** der Zahnring (7) sowohl in den ersten wie auch in den zweiten Zahnkranz (10, 12) eingreift.

13. Stell- oder Dosierknopf nach wenigstens einem der Ansprüche 8 bis 12, **dadurch gekennzeichnet, dass** der zweite kreisförmige Zahnkranz (12) neben dem ersten Zahnkranz (10) mit gleicher Längsachse angeordnet ist, die koaxial zur Achse des Drehelements (1) verläuft und der flexible Zahnring (7) koaxial innerhalb beider kreisförmiger Zahnkränze (10, 12) angeordnet ist und der koaxiale Nocken (5) am Drehelement (1) zur Verformung des flexiblen Zahnrings (7) in eine nicht kreisförmige Konfiguration, um den Zahnring (7) in eine teilweise Eingriffnahme (21, 22) mit den Zähnen des ersten und zweiten kreisförmigen Zahnkranzes (10, 12) zu bringen und zur Drehung der verformten Konfiguration des Zahnrings (7) dient, um eine Relativbewegung zwischen dem ersten und dem zweiten Zahnkranz (10, 12) und somit ein Verstellen der Skalierung (14) für Positions- oder Dosierwerte hervorzurufen.

14. Stell- oder Dosierknopf nach Anspruch 1, **dadurch gekennzeichnet, dass** auf das Drehelement (1.2) ein Doppelzahnrad (25) aufgesetzt ist, wobei ein Zahnrad (27) mit einem der Skalierung (14) zugeordneten Kronrad (30) mit einer Stirnverzahnung (Z4) und ein Zahnrad (28) mit einem Kronrad (30) mit einer Stirnverzahnung (Z1) zusammenwirkt.

**15.** Stell- oder Dosierknopf nach Anspruch 14, **dadurch gekennzeichnet, dass** die Zahnräder (27 und/oder 28) und/oder zumindest ein Kronrad (29 und/oder 30) eine Zahnung (Z1 bis Z4) mit einer zu den anderen Zahnungen unterschiedlichen Zähnezahl aufweist.

**16.** Stell- oder Dosierknopf nach wenigstens einem der Ansprüche 7 bis 15, **dadurch gekennzeichnet, dass** das Drehelement (1) mit einer weiteren Skala (4) versehen ist.

**17.** Stell- oder Dosierknopf nach wenigstens einem der Ansprüche 7 bis 16, **dadurch gekennzeichnet, dass** das über die zylindrischen Anzeigetrommel (11) koaxial steckbare zylindrisches Gehäuse (8) durch eine Schnappverbindung (20) an einem Stellgriff (2) gehalten ist.

**18.** Stell- oder Dosierknopf nach wenigstens einem der Ansprüche 2 bis 17, **dadurch gekennzeichnet, dass** zum Verbinden des Wellenteils (3) des Drehelements (1) mit einem Einstellobjekt die jeweiligen Anschlussabschnitte als Steckverbindung ausgebildet sind.

**19.** Stell- oder Dosierknopf nach Anspruch 18 , **dadurch gekennzeichnet, dass** als Steckverbindung ein Adapter (15) dient, dessen eines Ende einen Mehrkant (16), wie Vier- oder Sechskant, und dessen anderes Ende ein Sackloch (17) aufweist, welches eine Madenschraubenverbindung (18) aufweist, wobei der Mehrkant (16) in einen entsprechend ausgebildeten Innenkant (19) im Anschlussabschnitt des Drehelements (1) steckbar ist.

Fig. 1

8

11

14

9

4  2  1

Stellgriff
auf Nullposition

2.1

21

22

8

11

5

3/1

9

10/12

7

Stellgriff
90° gedreht

2.2

Stellgriff
180° gedreht

2.3

Stellgriff
270° gedreht

2.4

Stellgriff eine
Umdrehung gedreht

2.5

Fig. 2

10

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19958440 A1
- DE 3876566 T2